# EUROPEAN PATENT APPLICATION

(11) **EP 3 828 063 A1**
(43) Date of publication of application: **02.06.2021**
(21) Application number: 20208408.3
(22) Date of filing: 18.11.2020
(51) Int. Cl.: B62J 1/06

(54) **SYSTEMS AND METHODS OF BICYCLE SUSPENSION FIELD**

(30) Priority: 26.11.2019 US 201916695856
(71) Applicant: Cane Creek Cycling Components, Inc., Fletcher, North Carolina 28732 (US)
(72) Inventor: MONTPLAISIR, Sarah, Fletcher, NC North Carolina 28732 (US); LAFORGE, Jeff, Fletcher, NC North Carolina 28732 (US); MORRISON, James Gray, Fletcher, NC North Carolina 28732 (US)
(74) Representative: Serjeants LLP

(57) **Abstract**

An elastomer support for a parallelogram suspension in a bicycle is described. The support includes a deformable body (188) defining an opening (190). The deformable body (188) is configured to be disposed within a volume defined by the parallelogram suspension. An insert (192) is removably insertable into the opening (190) of the deformable body (188).

## Description

### FIELD

The present disclosure relates to systems and methods of bicycle suspension, and more particularly to suspensions for use with bicycle seat posts.

### BACKGROUND

Bicycles, particularly mountain bicycles, are often used on rough terrain where they subject the rider to vibrations caused by bumps and impacts from the ground surface. Full suspension systems that permit relative travel of the front and rear wheels with respect to the bicycle frame may dampen the ride, transferring fewer vibrations to the rider. However, full suspension systems must typically be integrated into the bicycle frame at the factory (particularly rear wheel suspension systems), with limited opportunity for significant upgrades or subsequent rider adjustment. While it may be possible to adjust (or tune) the suspension settings for an individual rider, suspension systems have fixed suspension travel distances which limit the range of dampening effects. Moreover, many bicycle designs lack full suspension systems - instead, using a fixed rear wheel with a suspended front fork or a fixed real wheel and a fixed front fork, leading to greater vibrational transfer to the rider. Riders seeking greater shock absorption must often turn elsewhere for aftermarket suspension solutions.

Seat post suspension systems typically involve the use of a suspended seat post that permits relative travel between the bicycle seat and the bicycle frame. Because seat posts can be readily swapped and installed aftermarket, it is not uncommon for riders to favor upgrades and adjustments to their seat post in search for a smoother ride.

However, seat post suspension systems typically come with limited suspension adjustability. More specifically, seat post suspensions typically utilize either nonadjustable suspension elements, such as single-setting pistons set to a fixed pressure, or complex hardware which requires professional adjustment and extensive time and tooling to adjust. The rider is thus stuck with the seat post suspension settings out-of-the-box with limited or no tunability.

Accordingly, an adjustable suspension other than for the rear and front wheels which permits the rider to quickly select between two or more adjustable suspension settings is desired.

### BRIEF DESCRIPTION

Aspects and advantages of the invention will be set forth in part in the following description, or may be obvious from the description, or may be learned through practice of the invention.

In accordance with one aspect, the present disclosure is directed to a deformable support for a parallelogram suspension in a bicycle. The deformable support includes a deformable body configured to be disposed within a volume defined by the parallelogram suspension. The deformable body can define an opening that can receive an insert. The insert can be selected from a group of inserts, each one of the group of inserts comprising a different spring rate. Thus, each insert can provide different suspension characteristics when installed in the deformable body, allowing the rider to tune their suspension settings by changing the insert.

In accordance with another aspect, the present disclosure is directed to a suspension for a bicycle seat post assembly. The suspension includes a first arm rotatably coupled to the seat post at a first end of the first swing arm, a second swing arm rotatably coupled to the seat post at a first end of the second swing arm, and a linkage rotatably coupled between a second end of the first swing arm and a second end of the second swing arm. A deformable support can be disposed in a volume defined between the first swing arm, the second swing arm, and the linkage. The deformable support can include a deformable body defining an opening and an insert removably insertable into the opening of the deformable body. In an embodiment, the insert can be selected from a group of inserts, each one of the group of inserts comprising a different spring rate.

In accordance with another aspect, the present disclosure is directed to a method of adjusting suspension stiffness for a bicycle. The method includes removing an existing insert from an opening defined in a deformable body disposed within a volume defined by a parallelogram suspension. The method further includes installing a new insert within the opening.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 includes an exploded view of a bicycle seat post suspension assembly in accordance with one or more embodiments of the present disclosure.
FIG. 2 includes a side view of a bicycle seat post suspension assembly with an insert installed in a deformable body of a deformable support in accordance with one or more embodiments of the present disclosure.
FIG. 3 includes a side view of a bicycle seat post suspension assembly with an insert removed from a deformable body in accordance with one or more embodiments of the present disclosure.
FIG. 4 includes a side view of a deformable support including a deformable body and an insert disposed within an opening of the deformable body in accordance with one or more embodiments of the present disclosure.
FIG. 5 includes a side view of a deformable support including the deformable body and the insert removed from the opening of the deformable body in accordance with one or more embodiments of the present disclosure.
FIG. 6 includes a side view of a deformable support including the deformable body and the insert disposed within an opening of the deformable body in accordance with one or more embodiments of the present disclosure.
FIG. 7 includes a side view of a deformable support including the deformable body and the insert removed from the opening of the deformable body in accordance with one or more embodiments of the present disclosure.
FIG. 8 includes a method of adjusting a suspension stiffness of a bicycle in accordance with one or more embodiments of the present disclosure.

### DETAILED DESCRIPTION

Reference now will be made in detail to embodiments of the invention, one or more examples of which are illustrated in the drawings. Repeat use of reference characters in the present specification and drawings is intended to represent the same or analogous features or elements of the present invention. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first," "second," and "third" may be used interchangeably to distinguish one component from another and do not necessarily signify sequence or importance of the individual components. As used herein, terms of approximation, such as "generally," or "about" include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

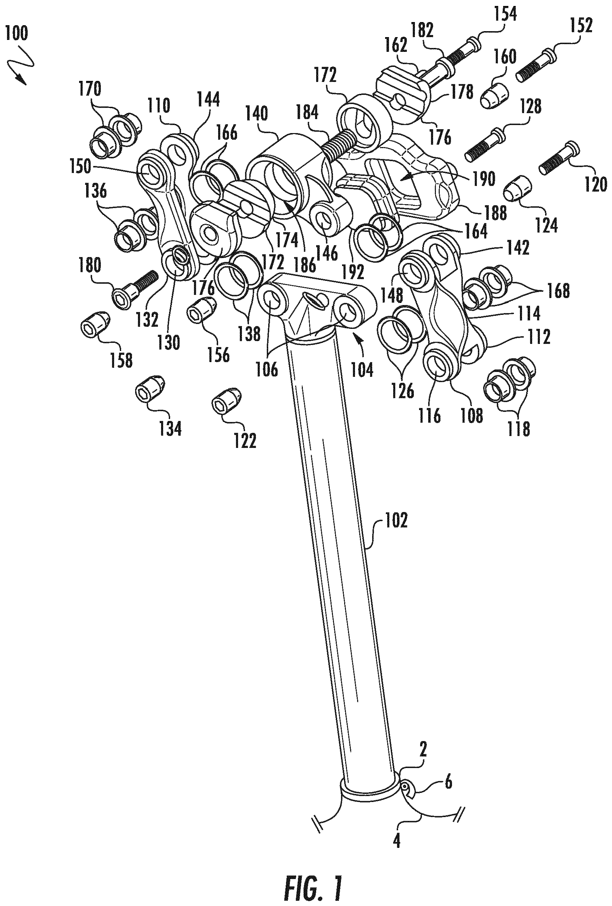

Referring now to the Figures, the present disclosure is generally directed to a bicycle seat post suspension assembly 100, such as the exemplary embodiment illustrated in FIG. 1. The bicycle seat post suspension assembly 100 can include a seat post 102 installable within a seat tube 2 of a bicycle 4. The seat post 102 may be translatable with respect to the seat tube 2 and secured therewith by a seat post clamp 6. In certain instances, the seat post 102 can have a generally round cross-sectional profile. In other instances, the seat post 102 can have a more aerodynamic profile, including a sharpened leading edge to reduce drag.

In an embodiment, the seat post 102 can terminate at an upper portion 104 including openings 106. The upper portion 104 may be integrally formed with the seat post 102 as a single monolithic structure or include one or more discrete component(s) attached to the seat post 102. For instance, the upper portion 104 may be threadably attached with the seat post 102, adhered or welded to the seat post 102, clamped to the seat post 102, or attached to the seat post 102 with another suitable attachment protocol. The openings 106 in the upper portion 104 can be spaced apart from one another by a suitable lateral distance to allow a first swing arm 108 and a second swing arm 110 to secure therewith and rotate to permit suspension dampening as described herein.

In an embodiment, the first swing arm 108 can include a first end 112 and a second end 142 spaced apart by a central portion 114. The first end 112 can include an opening 116 configured to align with one of the openings 106 in the upper portion 104 of the seat post 102. In a non-illustrated embodiment, the opening 106 can include a split opening, e.g., two discrete openings in axial alignment with one another and spaced apart by a gap like the openings 116 described below, to accommodate the upper portion 104 of the seat post 102 as described in greater detail herein. Bushings 118 can extend within the opening(s) 116 to allow the first swing arm 108 to rotate relative to the seat post 102. A fastener 120, such as a threaded fastener, can extend through the opening 106 in the upper portion 104 of the seat post 102 and the opening(s) 116 in the first swing arm 108 to attach the first swing arm 108 to the upper portion 104. The fastener 120 may be coupled with a threaded interface 122, such as a nut or threaded taper, disposed on the opposite side of the first swing arm 108. A nonthreaded interface 124, such as an unthreaded taper pin, may be disposed between the fastener 120 and the first swing arm 108 to facilitate smooth rotational movement of the first swing arm 108 relative to the upper portion 104 of the seat post 102. Rings 126, such as O-rings, may be disposed between the first swing arm 108 and the upper portion 104 of the seat post 102. In an embodiment, one or more rings 126 may be disposed on each side of the upper portion 104 to maintain proper spacing between the first swing arm 108 and the upper portion 104. In an embodiment, the rings 126 can include a deformable material. The rings 126 may form an interference fit between the first swing arm 108 and the upper portion 104 of the seat post 102, creating a smooth, aligned interface therebetween.

A similar arrangement to the first swing arm 108 can be formed between the upper portion 104 and the second swing arm 110. For example, a fastener 128 can extend through opening(s) 130 on a first end 132 of the second swing arm 110 and engage with a threaded interface 134. Bearings 136 can be disposed within the second swing arm 110 to increase rotational mobility with respect to the upper portion 104. Additionally, rings 136 can be used between the second swing arm 110 and the upper portion 104 as previously described to maintain proper alignment and create a smooth, aligned interface.

A linkage 140 can be rotatably coupled between a second end 142 of the first swing arm 108 and a second end 144 of the second swing arm 110. In an embodiment, the linkage 140 can include an opening 146 adapted to be rotatably aligned and coupled with opening(s) 148 in the first swing arm 108 and an opening (not illustrated) adapted to be rotatably aligned and coupled with opening(s) 150 in the second swing arm 110 using any combination of fasteners 152 and 154, threaded interfaces 156 and 158, nonthreaded interfaces 160 and 162, rings 164 and 166, and/or bearings 168 and 170, respectively.

In certain instances, the bearings 118, 136, 168 and/or 170 can include dry bearings, such as relatively low friction interfaces comprising one or more fluoropolymers (e.g., polytetrafluoroethylene (PTFE)). In other instances, the bearings 118, 136, 168 and/or 170 can include wet bearings, including, for example, grease or other low friction additive slurries, pastes, gels, dispersions, or the like. In an embodiment, at least two of the bearings 118, 136, 168 and 170 can include the same mechanism of low friction operation, e.g., both bearings 118 and 136 can include dry operation. In another embodiment, at least two of the bearings 118, 136, 168 and 170 can have different mechanisms of low friction operation as compared to one another.

The illustrated structure can be modified from the exemplary embodiment illustrated in FIG. 1 without changing the principles of operation described herein. For instance, the first swing arm 108 and/or second swing arm 110 can extend through a central cutout portion of the upper portion 104 of the seat post 102. That is, an outer surface of the engagement area between the upper portion and swing arm can be defined by the upper portion instead of the swing arm. Thus, the upper portion 104 can include a plurality of openings 106 for the first swing arm and a plurality of openings 106 for the second swing arm, with both swing arms including only one opening 116 and 130, respectively. By way of another example, the first swing arm 108 and/or second swing arm 110 can be indirectly coupled to the upper portion 104 or linkage 140, e.g., through one or more intermediary structures, e.g., additional linkages and/or swing arms.

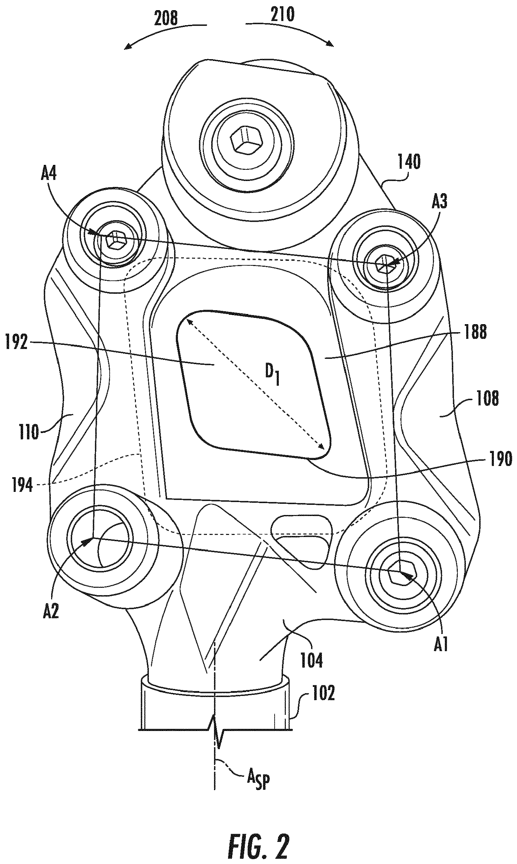

Referring to FIG. 2, a parallelogram suspension can be formed by the upper portion 104 of the seat post 102, the first swing arm 108, the second swing arm 110, and the linkage 140. The parallelogram suspension can absorb movement of the seat post 102 through angular deflection of the first and second swing arms 108 and 110. The first swing arm 108 can rotate relative to the upper portion 104 about a first axis A1. The second swing arm 110 can rotate relative to the upper portion 104 about a second axis A2. The first swing arm 108 can rotate relative to the linkage 140 about a third axis A3. The second swing arm 110 can rotate relative to the linkage 140 about a fourth axis A4. Rotation of the first swing arm 108 around axis A1 can coincide with rotation of the second swing arm 110 around axis A2. That is, for example, rotational displacement of the first swing arm 108 around axis A1 can be generally equal to rotational displacement of the second swing arm 110 around axis A2. Similarly, rotational displacement of the first swing arm 108 around axis A3 can be generally equal to rotational displacement of the second swing arm 110 around axis A4. In an embodiment, the upper portion 104 and the linkage 140 may remain parallel, or generally parallel, with respect to one another during rotational movements of the first and second swing arms 108 and 110. Thus, angular displacement of the first and second swing arms 108 and 110 (e.g., in either direction 208 or 210) does not affect the angular orientation of the linkage 140, allowing the seat (connected to the linkage 140 as described in greater detail herein) to remain at a fixed angular orientation during angular displacement of the swing arms 108 and 110 as may occur during shock absorption and release intervals of the bicycle seat post suspension assembly 100.

Referring again to FIG. 1, the bicycle seat post suspension assembly 100 can further include a saddle engagement structure configured to engage with a seat (not illustrated) of the bicycle. The saddle engagement structure can include, for example, an inner clamp 172 defining a saddle engagement surface 174 and an outer clamp 176 defining a complementary saddle engagement surface 178. The saddle engagement surfaces 174 and 178 can clamp to struts connected to the seat in order to secure the seat to the bicycle seat post suspension assembly 100. A saddle clamp bolt 180 and saddle clamp nut 182 can be used in concert to maintain clamping force against the seat strut. In an embodiment, a saddle clamp spring 184 can maintain outwardly biasing pressure, e.g., against the outer clamps 176, such that the saddle engagement structure opens upon loosening of the saddle clamp bolt 180 and nut 182. In an embodiment, the saddle engagement structure can be coupled with the linkage 140 at an opening 186 extending through the linkage 140.

The bicycle seat post suspension assembly 100 can further include a deformable support structure including a deformable body 188 defining one or more openings 190 and an insert 192 removably insertable into at least one of the one or more openings 190 of the deformable body 188.

In an embodiment, at least two of the openings 190 can have the same, or similar, shapes as compared to one another. In another embodiment, at least two of the openings 190 can have different shapes as compared to one another. In an embodiment, each opening 190 can be configured to receive one or more inserts 192. The inserts 192 can be discrete from one another, such as separate inserts 192. The separate inserts 192 can be coupled together, for example, by a support structure (not illustrated) extending between the separate inserts 192. While reference hereinafter is made to a deformable body 188 with a single opening 190, the disclosure is not intended to be limited to embodiments with single openings 190. Described embodiments of the deformable body 188 may be modified to include a plurality of openings 192.

In an embodiment, the insert 192 can be sized and shaped to have a close fit with the deformable body 188. In another embodiment, the insert 192 and deformable body 188 can include one or more gaps (e.g., air gaps) at an insert-deformable body interface.

By way of example, the insert 192 and opening 190 can define elongated shapes, such as ellipses or parallelograms. In the embodiment illustrated in FIG. 2, the insert 192 is canted relative to the axis of the seat post 102. That is, a longest dimension, D_{L}, of the insert 192 can be angularly offset from a longitudinal axis, A_{SP}, of the seat post 102. In particular, the insert 192 can be canted to more readily accommodate rotation of the parallelogram suspension from the unbiased state (as illustrated) to a compressed state in the direction indicated by line 208. Without wishing to be bound by any particular theory, it is believed that use of a canted, elongated insert may better distribute loading, e.g., from compression caused by the parallelogram suspension, as compared to, for example, load distribution in a non-elongated or non-canted insert such as a circular insert. The use of interchangeable shock dampening inserts described herein is not limited to elongated, canted inserts as described, and can include other-shaped inserts (e.g., circular inserts, triangular inserts, square inserts, etc.).

In an embodiment, the deformable body 188 can be disposed within a volume 194 defined between the first swing arm 108, the second swing arm 110, and the linkage 140. The volume 194 may be further defined by the upper portion 104 of the seat post 102. As represented by a dashed line in FIG. 2, the volume 194 may extend into any one or more of the first swing arm 108, the second swing arm 110, the linkage 140, and the upper portion 104 of the seat post 102. Extension of the deformable body 188 into at least the first and/or second swing arms 108 and 110 may secure the deformable body 188 to the parallelogram suspension, preventing undesirable ejection of the deformable body 188 from the volume 194, e.g., during angular displacement of the first and second swing arms 108 and 110. In an embodiment, the volume 194 may not extend into the linkage 140 and/or the upper portion 104 of the seat post 102. In one or more embodiments, termination of the deformable body 188 external to the linkage 140 and/or upper portion 104 may enhance dampening performance as compared to embodiments where the deformable body 188 extends into the linkage 140 and/or upper portion 104 by reducing frictional interference between the deformable body 188 and the linkage 140 and/or upper portion 104.

In one or more embodiments, the deformable body 188 and insert 192 can be formed from different materials and/or have different material properties. For instance, the deformable body 188 can be formed from a first material having a first spring rate and the insert 192 can be formed from a second material having a second spring rate, which may be different from the first spring rate. In a particular embodiment, the spring rate of the deformable body 188 may be higher than the spring rate of the insert 192. That is, in certain instances, the insert 192 may be more readily deformable than the deformable body 188. The deformable body 188 may have a different Shore A hardness as compared to the insert 192. By way of example, the deformable body 188 can have a Shore A hardness in a range from about 60 and about 70 while the insert can have a Shore A hardness in a range from about 40 and about 80. In an embodiment, the deformable body 188 and insert 192 can both be formed from elastomers, such as rubber.

In one or more embodiments, the deformable body 188 and insert 192 can be formed from the same, or similar materials, having same, or similar, material properties (e.g., same or similar spring rates). In certain instances, the rider may wish to utilize the deformable body 188 without the insert 192 disposed within the opening 190. In such configuration, the deformable body 188 may more easily deflect to absorb shock. In other instances, the rider may utilize the deformable body 188 within the insert 192. In such configuration, the deformable body 188 may be less easily deflected to absorb shock as the deformable body 188 is less deformable when the insert 192 is present within the opening 190.

In an embodiment, the insert 192 can be selected from a group in inserts each having different characteristics as compared to one another. For example, the inserts may have different Shore A hardnesses as compared to one another. In another example, the inserts may have different spring rates as compared to one another. In a further example, the inserts may have different dimensions as compared to one another. In yet another example, the inserts may have different porosities as compared to one another. In yet a further example, the inserts may have different shapes as compared to one another. The rider can select between the various inserts, e.g., between two or more inserts such as three inserts, four inserts, five inserts, or more than five inserts, to obtain a desired suspension characteristic. As discussed herein, the inserts 192 are readily interchangeable and do not require special tools or professional installation to adjust between.

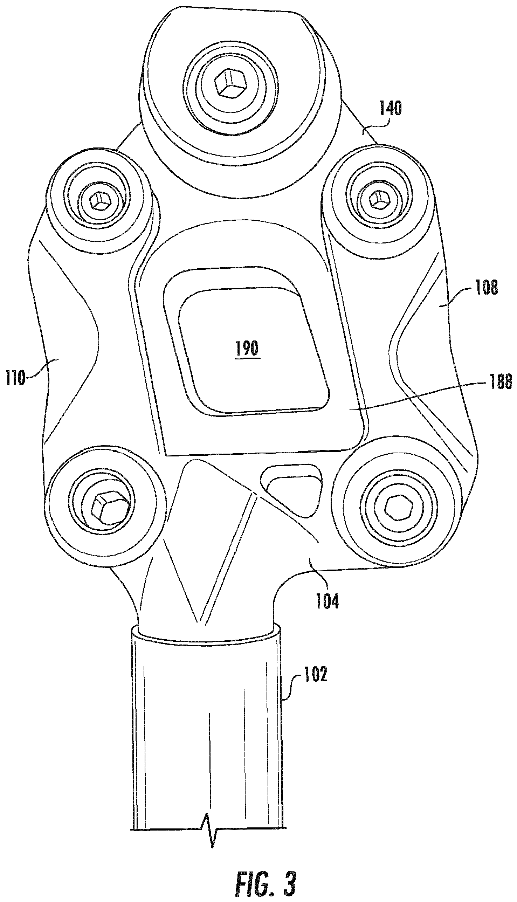

The insert 192 can be removable from the opening 190 in the deformable body 188 as illustrated in FIG. 3. For instance, the insert 192 can be translatable with respect to the opening 190 in a direction generally perpendicular to a plane of rotation of the parallelogram suspension (e.g., the combination of the first swing arm 108, the second swing arm 110, the linkage 140, and the upper portion 104 of the seat post 102). In an embodiment, the insert 192 can translate in either direction with respect to the opening 190. That is, the insert 192 can be removed from a left side of the seat post 102 or from the right side of the seat post 102. In another embodiment, the insert 192 can be translatable relative to the opening 190 in only one direction.

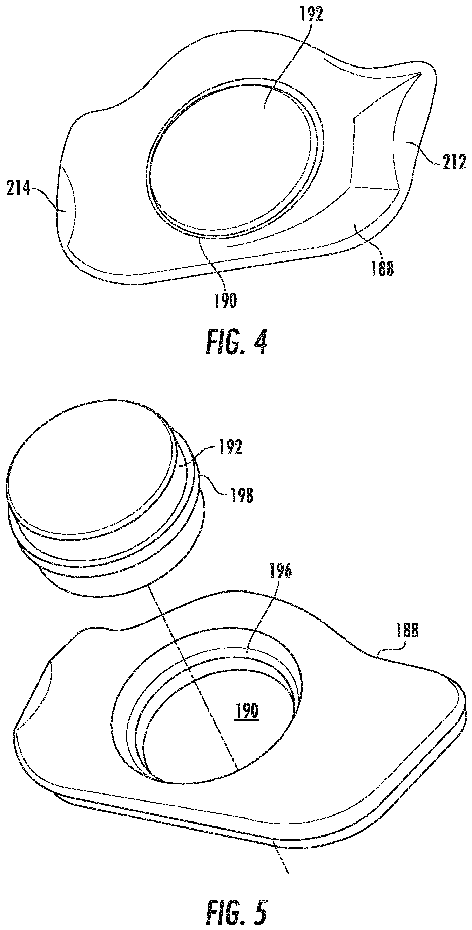

FIG. 4 illustrates an embodiment of the deformable support with the insert 192 disposed within the opening 190 of the deformable body 188. As previously described, the deformable body 188 may extend at least partially into at least one of the first swing arm 108, the second swing arm 110, the linkage 140, and/or the upper portion 104 of the seat post 102. The shape of the deformable body 188 illustrated in FIG. 4 includes conformal features configured to fit within and properly seat relative to the volume 194 (FIG. 2). In particular, the exemplary deformable body 188 illustrated in FIG. 4 includes extensions 212 and 214 that extend into the first and second swing arms 108 and 110 and are not seen, e.g., in FIG. 2.

FIG. 5 illustrates the insert 192 as seen when removed from the opening 190 in the deformable body 188. In an embodiment, the deformable body 188 defines an engagement feature 196 and the insert 192 defines a complementary engagement feature 198. In the illustrated embodiment, the engagement feature 196 of the deformable body 188 includes a recess extending around the circumference of the opening 190. In an embodiment, the recess can extend continuously around the circumference of the opening 190. In another embodiment, the recess can be discontinuous, including for example one or more discrete recesses spaced apart from each other. The recesses can have same or different characteristics as compared to one another. For instance, the recesses can have same or different shapes, sizes, depths, or other attributes as compared to one another. The complementary engagement feature 198 of the insert 192 can be shaped and sized to selectively engage with the engagement feature 196 of the deformable body 188. For example, in the illustrated embodiment, the complementary engagement feature 198 comprises a ridge extending outward from a side of the insert 192. The ridge has a cross-sectional profile shaped to fit within the recess of the engagement feature 196 of the deformable body 188. The complementary engagement features 196 and 198 can secure the insert 192 relative to the deformable body 188. In other exemplary embodiments, the complementary engagement features 196 and 198 can include complementary shaped and/or sized notches, castellations, undulations, bumps, indicia, tines, threads, wings, or other suitable engagement structures. As illustrated, the complementary engagement features 196 and 198 may be centrally aligned relative to the opening 198, i.e., generally halfway through a thickness of the insert 192 and opening 190.

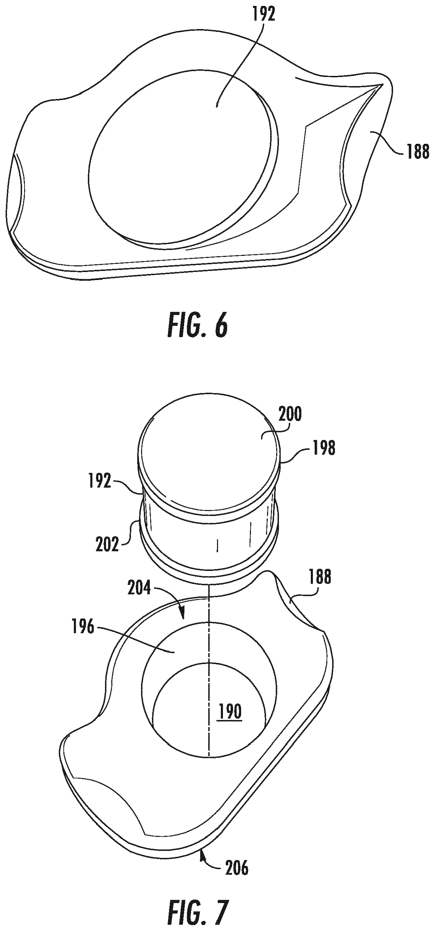

FIGS. 6 and 7 illustrate an embodiment of the insert 192 where the complementary engagement features 196 and 198 are disposed at major surfaces 204 and 206 of the deformable body 188 of the insert 192 and opening 190. That is, in an embodiment, the complementary engagement feature 198 of the insert 192 can include a first flange 200 disposed on a first side of the insert 192 and a second flange 202 disposed on a second side of the insert 192. The first flange 200 can seat with the first major surface 204 of the deformable body 188 and the second flange 202 can seat with the second major surface 206 of the deformable body 188. The flanges 200 and 202 can prevent displacement of the insert 192 from the opening 190 in a manner like that described with respect to the complementary engagement features 196 and 198 in FIGS. 4 and 5. In certain instances, the major surfaces 204 and/or 206 may include recesses (not illustrated) configured to receive the flanges 200 and/or 202 to further ensure proper alignment of the insert 192 within the opening 190.

In one or more embodiments, installation of the insert 192 within the opening 190 of the deformable body 188 can include translating the insert 192 into the opening 190. In an embodiment, the installer may detect a tactile indication of proper alignment between the deformable body 188 and the insert 192 when the complementary engagement features 196 and 198 engage with one another. That is, the insert 192 may naturally click into place within the opening 190 after being installed past a certain point, signaling to the installer of proper fit between the insert 192 and the deformable body 188.

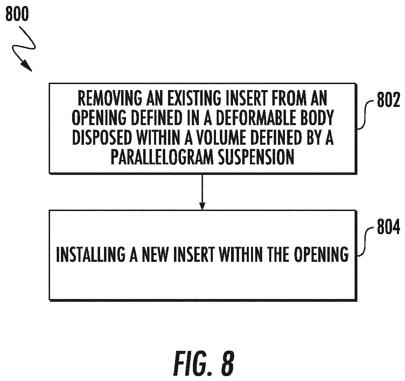

FIG. 8 illustrates an exemplary method 800 of adjusting suspension stiffness for a bicycle including a step 802 of removing an existing insert from an opening defined in a deformable body disposed within a volume defined by a parallelogram suspension. Removing the existing insert can be performed by disengaging complementary engagement features of the deformable body and the insert from one another. Removal may further include translating the existing insert from the opening in a direction generally perpendicular to a plane of rotation of the parallelogram suspension.

The method 800 can further include a step 804 of installing a new insert within the opening. The new insert can have a different material characteristic as compared to the removed insert. For instance, the new insert can have a different spring rate, a different Shore A hardness, a different size, a different shape, and/or one or more other different attributes as compared to the existing insert previously removed. In an embodiment, installing the new insert is performed by translating the new insert into the opening until an installer detects a tactile indication of proper alignment between the deformable body and the new insert. Tactile indication may be generated for example, when complementary engagement features of the insert and deformable body align and snap into place, at which point the force required to further slide the insert may suddenly increase. In an embodiment, installation of the new insert may be performed in either direction of the opening. In another embodiment, installation of the insert may occur from a same side of the opening as removal at step 802.

Those of ordinary skill in the art will appreciate that systems and methods described herein provide numerous advantages over the prior art. For example, deformable supports and suspension systems including deformable supports such as those described in exemplary embodiments in accordance with the present disclosure may permit a rider to quickly and easily adjust suspension settings on a bicycle without requiring changes to the bicycle frame or adjustments to existing front and/or rear suspensions. Bicycle seat post suspension assemblies in accordance with embodiments of the present disclosure may allow the rider to quickly select between several available inserts, each having one or more different suspension characteristics, to selectively tune the ride of the bicycle. Embodiments of the present disclosure remove the need for expensive hardware, tooling, and professional experience to rapidly alter the performance of a bicycle.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A deformable support for a parallelogram suspension in a bicycle, the deformable support comprising:
a deformable body (188) defining an opening (190), wherein the deformable body (188) is configured to be disposed within a volume defined by the parallelogram suspension; and
an insert (192) removably insertable into the opening (190) of the deformable body (188).

2. A deformable support according to claim 1, wherein the deformable body (188) comprises a first material having a first spring rate and the insert (192) comprises a second material having a second material spring rate.

3. A deformable support according to claim 1 or claim 2, wherein the insert (192) is selectable from a group of inserts, each one of the group of inserts comprising a different spring rate.

4. A deformable support according to any preceding claim, wherein the deformable body (188) and insert (192) each comprise an elastomer, wherein the deformable body (188) has a Shore A Hardness in a range between about 60 and about 70, and wherein the insert (192) has a Shore A Hardness in a range between about 40 and about 80.

5. A deformable support according to any preceding claim, wherein the deformable body (188) and insert (192) are selectively maintained in alignment with one another through complementary engagement features (196, 198) disposed on the deformable body (188) and insert (192).

6. A deformable support according to any of claims 1 to 4, wherein the opening (190) of the deformable body (188) defines an engagement feature (196), and wherein the insert (192) has a complementary engagement feature (198) configured to selectively engage with the engagement feature (196) of the deformable body (188).

7. A deformable support according to claim 6, wherein the engagement feature (196) of the deformable body (188) comprises a ridge or channel extending around at least a portion of the circumference of the opening (190), and wherein the complementary engagement feature (198) of the insert (192) comprises the opposite of the ridge or channel extending around at least a portion of the insert (192) and configured to engage with the ridge or channel of the deformable body (188).

8. A deformable support according to any preceding claim, wherein the opening (190) of the deformable body (188) defines an elongated shape, such as an ellipse or parallelogram.

9. A deformable support according to any preceding claim, wherein the opening comprises a plurality of openings.

10. A deformable support according to claim 9, wherein at least two of the plurality of openings are configured to receive an insert.

11. A suspension for a bicycle seat post assembly (100), the suspension comprising:
a first swing arm (108) rotatably coupled to a seat post (102) at a first end of the first swing arm (108);
a second swing arm (110) rotatably coupled to the seat post (102) at a first end of the second swing arm (110);
a linkage (140) rotatably coupled between a second end of the first swing arm (108) and a second end of the second swing arm (110); and
a deformable support according to any preceding claim disposed in a volume defined between the first swing arm (108), the second swing arm (110), and the linkage (140).

12. A suspension according to claim 11, wherein the opening (190) in the deformable body (188) is spaced apart from the first swing arm (108), the second swing arm (110), and the linkage (140).

13. A suspension according to claim 11 or claim 12, wherein the insert (192) is insertable into the opening (190) of the deformable body (188) in a direction generally perpendicular to a plane of rotation of the first and second swing arms (108, 110).

14. A method (800) of adjusting suspension stiffness for a bicycle, the method comprising:
removing (802) an existing insert from an opening defined in a deformable body disposed within a volume defined by a parallelogram suspension; and
installing (804) a new insert within the opening;
wherein the existing insert has a first spring rate and the new insert has a second spring rate preferably different than the first spring rate.

15. A method according to claim 14, wherein removing the existing insert comprises:
disengaging complementary engagement features of the deformable body and insert from one another; and
translating the existing insert from the opening in a direction generally perpendicular to a plane of rotation of the parallelogram suspension; and
wherein installing the new insert is preferably performed by translating the new insert into the opening (190) until an installer detects a tactile indication of proper alignment between the deformable body (188) and the new insert.
